# EUROPÄISCHE PATENTSCHRIFT

(11) **EP 0 777 586 B1**
(45) Veröffentlichungstag und Bekanntmachung des Hinweises auf die Patenterteilung: **10.05.2000**
(21) Anmeldenummer: 96902878.6
(22) Anmeldetag: 22.02.1996
(51) Int. Cl.: B60K 28/16, F02B 37/12

(54) **EINRICHTUNG ZUM REDUZIEREN DES MOTORDREHMOMENTS EINER BRENNKRAFTMASCHINE MIT TURBOLADER**
DEVICE FOR REDUCING THE ENGINE TORQUE OF AN INTERNAL COMBUSTION ENGINE WITH A TURBO-CHARGER
DISPOSITIF PERMETTANT DE REDUIRE LE COUPLE MOTEUR D'UN MOTEUR A COMBUSTION INTERNE A TURBOCOMPRESSEUR

(30) Priorität: 26.05.1995 DE 19519381
(43) Veröffentlichungstag der Anmeldung: 11.06.1997
(73) Patentinhaber: ROBERT BOSCH GMBH, 70442 Stuttgart (DE)
(72) Erfinder: SCHNAIBEL, Eberhard, D-71282 Hemmingen (DE); STEINBRENNER, Ulrich, D-70195 Stuttgart (DE); WAGNER, Wolfgang, D-70825 Korntal-Münchingen (DE); ZHANG, Hong, D-93057 Regensburg (DE)
(86) Internationale Anmeldenummer: DE9600272
(87) Internationale Veröffentlichungsnummer: WO9637377

(56) Entgegenhaltungen:
- DE-A- 4 424 160
- DE-C- 3 224 254
- US-A- 5 083 434
- US-A- 5 213 178
- US-A- 5 365 908

## Beschreibung

### Stand der Technik

Die vorliegende Erfindung betrifft eine Einrichtung zum Reduzieren des Motordrehmoments einer Brennkraftmaschine mit Turbolader, wobei die Einrichtung das Motordrehmoment durch Absenken des Ladedrucks und durch Zylinderausblendung reduziert.

Eine derartige Einrichtung ist aus der DE 32 24 254 bekannt. Gemäß diesem Stand der Technik wird zunächst durch Senken des Ladedrucks das Motordrehmoment begrenzt bzw. soweit reduziert, daß unabhängig davon, wie stark der Fahrer eines Fahrzeugs das Gaspedal niederdrückt, kein Radschlupf auftritt. Reicht die Absenkung des Ladedrucks nicht aus, um ein gewünschtes Motordrehmoment zu erreichen, wird nach der Ladedruckabsenkung noch eine Zylinderausblendung vorgenommen. Die Steuerung des Motordrehmoments erfolgt hier in Abhängigkeit vom detektierten Radschlupf. Die Steuerung des Motordrehmoments hängt bei diesem Stand der Technik lediglich von einer einzigen das Fahrzeugverhalten beschreibenden Größe, nämlich vom Radschlupf, ab.

Aus der US-A-5,365,908 geht hervor, daß das Motordrehmoment über den Ladedruck gesteuert werden kann. Gemäß der US-A-5,365,908 wird durch Erhöhung des Ladedrucks bei einer Brennkraftmaschine dessen Drehmomenten-Kennlinie so beeinflußt, daß die Drehmomente sämtlicher Betriebszustände der Maschine mit einem unterhalb des stöchiometrischen Verhältnisses liegenden Luft-Kraftstoff-Gemisch erzielt werden können.

### Aufgabe und Lösung

Der Erfindung liegt nun die Aufgabe zugrunde, eine Einrichtung der eingangs genannten Art anzugeben, welche das Motordrehmoment in Abhängigkeit von einer Vielzahl von Einflußgrößen steuern bzw. regeln kann, wobei eine möglichst schnelle Adaption an ein sich dynamisch veränderndes Soll-Motordrehmoment realisierbar sein soll.

Erfindungsgemäß wird diese Aufgabe gemäß Anspruch 1 gelöst.

Eine Absenkung des Ladedrucks geht relativ langsam von statten, so daß als Folge davon die Adaption des Motordrehmoments mit größerer Zeitverzögerung erfolgen würde. Dadurch, daß zusätzlich zur Ladedruckreduzierung eine Zylinderausblendung und/oder Zündwinkelverstellung durchgeführt wird, erreicht man eine sehr rasche Adaption des Motordrehmoments an ein Soll-Motordrehmoment.

Dadurch daß als Steuer- oder Regelgröße für das Motordrehmoment ein vorgegebenes Soll-Motordrehmoment herangezogen wird, kann eine Vielzahl von Motor- bzw. Fahrzeugeinflußgrößen berücksichtigt werden. So kann beispielsweise das Soll-Motordrehmoment aus einer Antriebsschlupfregelung (ASR) abgeleitet sein oder eine Steuer- bzw. Regelgröße darstellen, die aus der Anforderung einer Drehzahlbegrenzung oder Geschwindigkeitsbegrenzung oder einem Getriebeeingriff resultiert.

### Beschreibung von Ausführungsbeispielen

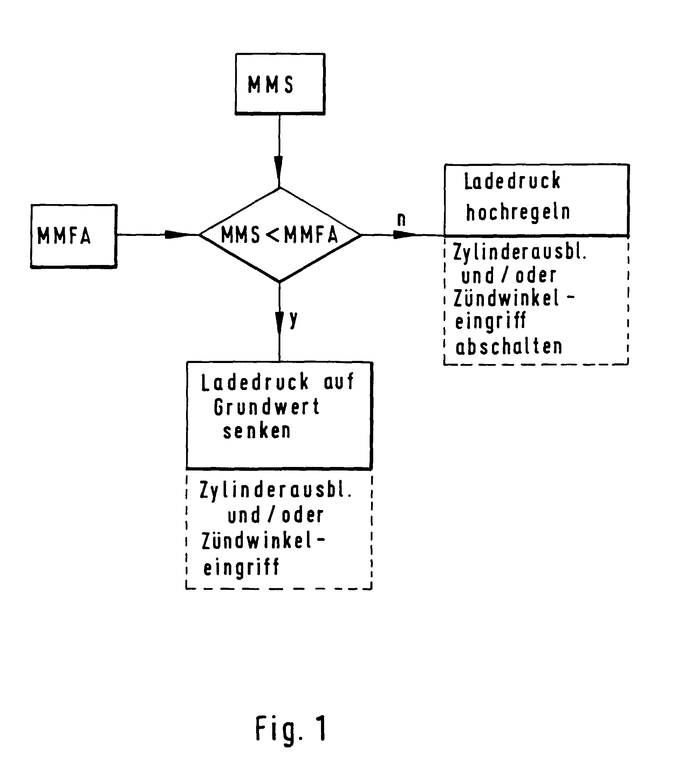

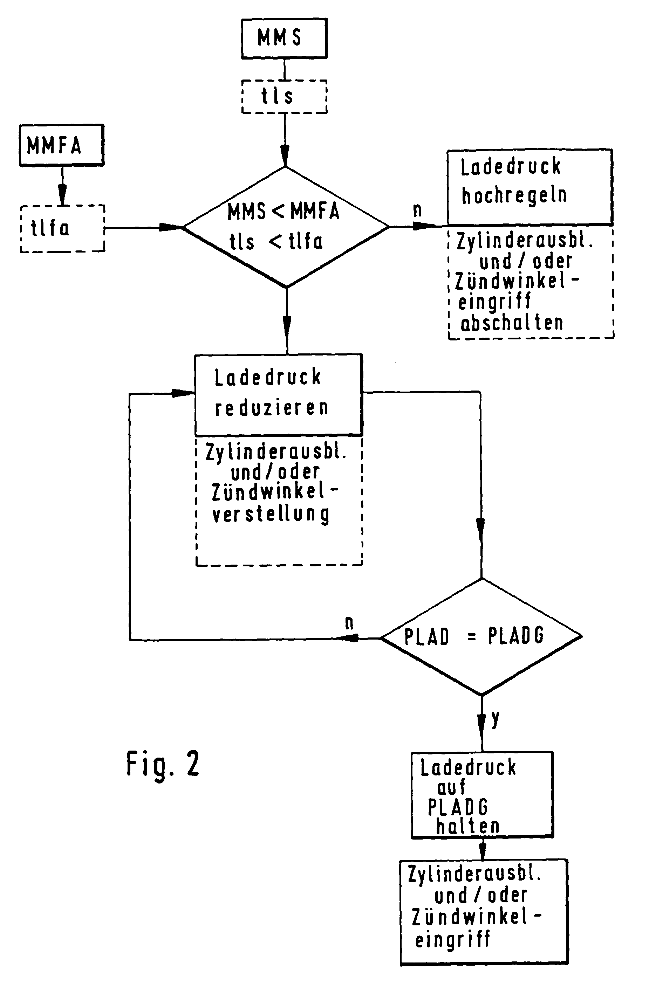

Anhand zweier in der Zeichnung dargestellter Ausführungsbeispiele wird nachfolgend die Erfindung näher erläutert. Es zeigen Figur 1 ein Ablaufdiagramm für eine Steuerung des Ladedrucks einer Brennkraftmaschine und Figur 2 ein Ablaufdiagramm für eine Regelung des Ladedrucks.

Die Ausführungsbeispiele betreffen eine Einrichtung, die bei einer Brennkraftmaschine mit Turbolader den Ladedruck des Turboldaders so steuert bzw. regelt, daß das Motordrehmoment auf ein vorgegebenes Soll-Motordrehmoment reduziert wird.

In Figur 1 ist der Funktionsablauf einer Steuereinrichtung dargestellt, der ein Soll-Motordrehmoment MMS als Referenzgröße zur Verfügung steht. Dieses Soll-Motordrehmoment MMS kann beispielsweise von einem Antriebsschlupfregelsystem stammen, welches ein für die Vermeidung eines Radschlupfes erforderliches Soll-Motordrehmoment bestimmt. Dieses Soll-Motordrehmoment MMS wird mit einem ohne Eingriff auf den Ladedruck gemessenen oder geschätzten Motordrehmoment MMFA verglichen. Ist dieses Motordrehmoment MMFA größer als das vorgegebene Soll-Motordrehmoment MMS, dann wird der Ladedruck auf seinen Grundwert gesenkt. Der Grundwert ist ein fester Wert, der dem kleinstmöglichen Ladedruck entspricht. Da die Senkung des Ladedrucks und die dadurch resultierende Änderung der Füllung in den Zylindern der Brennkraftmaschine (das ist die Luftmasse pro Hub im Zylinder) relativ langsam von statten gehen, wird in Abhängigkeit von der momentanen Füllung gleichzeitig eine Zylinderausblendung und/oder ein Zündwinkeleingriff durchgeführt, um die Forderung nach dem Soll-Motordrehmoment auch während des dynamischen Motorbetriebs einzuhalten. Solange das Soll-Motordrehmoment kleiner als das ohne Eingriff auf den Ladedruck gegebene Motordrehmoment MMFA ist, bleibt die Zylinderausblendung und/oder der Zündwinkeleingriff bestehen. Sobald aber das ohne Eingriff auf den Ladedruck gegebene Motordrehmoment MMFA gleich oder kleiner als das Soll-Motordrehmoment MMS ist, wird der Ladedruck wieder hochgeregelt und die Zylinderausblendung und/oder der Zündwinkeleingriff abgeschaltet.

Die durch die Ladedruckabsenkung erfolgende Reduzierung der Füllung in den Zylindern hat zur Folge, daß die Abgastemperatur sinkt. Eine Anfettung des Gemisches zu Kühlzwecken ist deshalb nicht erforderlich. Sofern eine Zylinderausblendung durchgeführt wird, ist eine Anfettung auch nicht zulässig, da sonst unter Umständen der Turbolader und ein vorhandener Katalysator Schaden nehmen könnten.

Statt das Soll-Motordrehmoment MMS mit dem ohne Eingriff auf den Ladedruck gegebenen Motordrehmoment MMFA zu vergleichen, kann auch ein Vergleich von Betriebsgrößen des Motors durchgeführt werden, die mit dem Motordrehmoment im Zusammenhang stehen. Als Motorbetriebsgröße kommt beispielsweise die aus dem Soll-Motordrehmoment berechnete Last tls in Frage, welche mit der ohne Eingriff auf den Ladedruck gegebenen Last tlfa verglichen wird.

Bei der vorangehend beschriebenen Steuereinrichtung wird bei Anforderung einer Drehmomentenreduzierung der Ladedruck auf einen festen minimalen Wert (Grundwert) gesenkt. Eine feinere Anpassung des Ladedrucks an ein erforderliches Soll-Motordrehmoment erreicht eine Regeleinrichtung, deren Funktionsweise in Figur 2 dargestellt ist. Wie bereits oben im Zusammenhang mit der Steuereinrichtung beschrieben, wird der Regeleinrichtung ein Soll-Drehmoment MMS und ein ohne Eingriff auf den Ladedruck gegebenes Motordrehmoment MMFA zur Verfügung gestellt. Beide Motordrehmomente MMS und MMFA werden miteinander verglichen. Anstelle der Drehmomente können auch entsprechende Betriebsgrößen des Motors, z.B. eine Soll-Last tls und eine ohne Eingriff auf den Ladedruck gegebene Last tlfa miteinander verglichen werden. Ist die Soll-Größe MMS (tls) kleiner als die Vergleichsgröße MMFA (tlfa), dann wird der Ladedruck auf einen Wert reduziert, aus dem eine Füllung der Zylinder resultiert, die dem angeforderten Soll-Motordrehmoment MMS entspricht. Da die Abregelzeit für den Ladedruck relativ lange dauert, wird gleichzeitig ein Zündwinkeleingriff und/oder eine Zylinderausblendung durchgeführt, um die Forderung nach dem Soll-Motordrehmoment auch während des dynamischen Motorbetriebs aufrechtzuerhalten. Ist der Ladedruck PLAD bis auf seinen Grundwert PLADG reduziert worden (PLAD = PLADG), so wird er auf seinem Ladedruckgrundwert PLADG gehalten und die erforderliche weitere Drehmomentenreduzierung wird durch Zylinderausblendung und/oder Zündwinkeleingriff fortgeführt, so daß das Soll-Motordrehmoment nicht überschritten wird. Sobald die Soll-Größe (Soll-Motordrehmoment MMS oder Soll-Last tls) gleich oder größer als die Vergleichsgröße (ohne Eingriff auf den Ladedruck gegebenes Motordrehmoment MMFA oder Last tlfa) ist, wird der Ladedruck hochgeregelt und die Zylinderausblendung und/oder Zündwinkeleingriff abgeschaltet.

## Patentansprüche

1. Einrichtung zum Reduzieren des Motordrehmoments einer Brennkraftmaschine mit Turbolader, wobei die Einrichtung das Motordrehmoment durch Absenken des Ladedrucks und durch Zylinderausblendung reduziert, dadurch gekennzeichnet, daß die Einrichtung gleichzeitig, nicht nacheinander, den Ladedruck senkt und eine Zylinderausblendung und/oder Zündwinkelverstellung durchführt, wenn ein vorgegebenes Soll-Motordrehmoment (MMS) bzw. eine damit zusammenhängende Sollbetriebsgröße (tls) des Motors kleiner ist als ein ohne Eingriff auf den Ladedruck gegebenes Motordrehmoment (MMFA) bzw. eine damit zusammenhängende Betriebsgröße (tlfa) des Motors.

2. Einrichtung nach Anspruch 1, dadurch gekennzeichnet, daß sie den Ladedruck auf einen fest vorgegebenen Grundwert senkt.

3. Einrichtung nach Anspruch 1, dadurch gekennzeichnet, daß sie den Ladedruck auf einen Wert herunterregelt, bei dem das ohne Eingriff auf den Ladedruck gemessene oder geschätzte Motordrehmoment (MMFA) bzw. eine dazu proportionale Betriebsgröße (tlfa) des Motors gleich dem vorgegebenen Soll-Motordrehmoment (MMS) bzw. einer dazu proportionalen Soll-Betriebsgröße (tls) des Motors ist.

## Revendications

1. Dispositif servant à réduire le couple moteur d'un moteur à combustion interne à turbocompresseur, dans lequel le dispositif réduit le couple moteur en abaissant la pression d'admission et en fermant progressivement les cylindres,
caractérisé en ce que
le dispositif, en même temps, et pas l'un après l'autre, abaisse la pression d'admission et effectue une fermeture progressive des cylindres et/ou un décalage de l'angle d'allumage, quand un couple moteur de consigne (MMS) prédéfini ou une grandeur de fonctionnement de consigne (tls), en relation avec le précédent, du moteur est inférieur à un couple moteur (MMFA) donné ou à une grandeur de fonctionnement (tlfa) du moteur donnée sans intervention sur la pression d'admission.

2. Dispositif selon la revendication 1,
caractérisé en ce que
il abaisse la pression d'admission à une valeur de base prédéfinie de façon fixe.

3. Dispositif selon la revendication 1,
caractérisé en ce que
il abaisse la pression d'admission à une valeur à laquelle le couple moteur (MMFA) ou une grandeur de fonctionnement du moteur (tlfa) proportionnelle au précédent, mesuré ou estimé sans intervention sur la pression d'admission, est égal au couple moteur de consigne prédéfini (MMS) ou à une grandeur de fonctionnement de consigne (tls) proportionnelle au précédent, du moteur.

## Claims

1. Device for reducing the engine torque of an internal combustion engine with a turbocharger, the device reducing the engine torque by lowering the boost pressure and by cylinder shut-off, characterized in that the device simultaneously, rather than successively, lowers the boost pressure and carries out a cylinder shut-off and/or ignition angle adjustment if a specified desired engine torque (MMS) or a desired engine operating variable (tls) related to the latter is lower than an engine torque (MMFA) without an intervention into the boost pressure or an engine operating variable (tlfa) related to this torque.

2. Device according to Claim 1, characterized in that it lowers the boost pressure to a fixed specified basic value.

3. Device according to Claim 1, characterized in that it adjusts the boost pressure downwards to a value at which the engine torque (MMFA) measured or estimated without an intervention into the boost pressure or an engine operating variable (tlfa) proportional to this torque is equal to the specified desired engine torque (MMS) or a desired engine operating variable (tls) proportional thereto.
